# EUROPÄISCHE PATENTSCHRIFT

(11) **EP 1 758 007 B1**
(45) Veröffentlichungstag und Bekanntmachung des Hinweises auf die Patenterteilung: **12.12.2007**
(21) Anmeldenummer: 05018231.0
(22) Anmeldetag: 23.08.2005
(51) Int. Cl.: G05D 16/10

(54) **Fluidbetätigter Stellungsregler**
Fluid actuated position controller
Régulateur de position actionné par fluide

(43) Veröffentlichungstag der Anmeldung: 28.02.2007
(73) Patentinhaber: Festo AG & Co., 73734 Esslingen (DE)
(72) Erfinder: Wirtl, Hannes, 86956 Schonbau (DE); Maichl, Martin, 73084 Salach (DE); Frisch, Herbert, 3542 Gföhl (AT)
(74) Vertreter: Abel, Martin

(56) Entgegenhaltungen:
- EP-A- 0 474 437
- DE-A1- 3 722 315
- DE-A1- 19 504 364
- US-A- 6 021 799
- PATENT ABSTRACTS OF JAPAN Bd. 017, Nr. 557 (P-1626), 7. Oktober 1993 (1993-10-07) & JP 05 158552 A (CKD CORP), 25. Juni 1993 (1993-06-25)

## Beschreibung

Die Erfindung betrifft einen fluidbetätigten Stellungsregler für Arbeitsvorrichtungen, insbesondere für Prozessventile, mit einem Reglergehäuse, in dem mindestens eine durch gesteuerte Fluidbeaufschlagung unter Ausführung einer Stellbewegung verstellbare Stelleinrichtung angeordnet ist, die in Abhängigkeit von ihrer Stellung in der Lage ist, einen Speiseanschluss, einen Entlüftungsanschluss und einen für den Anschluss der Arbeitsvorrichtung vorgesehenen Arbeitsanschluss in unterschiedlicher Weise fluidisch miteinander zu verschalten.

Ein aus der EP 0726511 B1 bekannter Stellungsregler dieser Art enthält eine in einem Reglergehäuse angeordnete Stelleinrichtung, die in der Lage ist, einen Arbeitsanschluss in Abhängigkeit von der eingenommenen Position wahlweise mit einem Speiseanschluss oder einem Entlüftungsanschluss zu verbinden oder gleichzeitig von beiden Anschlüssen abzutrennen. Auf diese Weise kann der am Arbeitsanschluss abgreifbare Fluiddruck, der beispielsweise für die Betätigung eines Prozessventils oder einer sonstigen Arbeitsvorrichtung verwendet wird, bedarfsgemäß vorgegeben werden. Die für den momentanen Schaltzustand verantwortliche Position der Stelleinrichtung kann durch einen veränderlichen Steuerdruck beeinflusst werden, der entgegengesetzt zu einer mechanischen Federeinrichtung auf ein Membranelement der Stelleinrichtung einwirkt. Da der Stellungsregler so ausgelegt ist, dass die Stelleinrichtung bei einem dem Umgebungsdruck entsprechenden Steuerdruck die Entlüftungsstellung einnimmt, ist es relativ schwierig, den Steuerdruck exakt so vorzugeben, dass eine den Arbeitsanschluss gleichzeitig von den beiden anderen Anschlüssen abtrennende Schließstellung vorliegt, die eine konstante Stellung der angeschlossenen Arbeitsvorrichtung zur Folge hat.

Es ist die Aufgabe der vorliegenden Erfindung, einen kompakten fluidbetätigten Stellungsregler zu schaffen, der mit einfachen Maßnahmen eine präzise Ansteuerung einer Arbeitsvorrichtung ermöglicht.

Zur Lösung dieser Aufgabe ist vorgesehen, dass die Stelleinrichtung zur Vorgabe ihrer Position zwei in einander entgegengesetzte Richtungen der Stellbewegung weisende, untereinander gleichgroße wirksame Fluidbeaufschlagungsflächen aufweist, die jeweils eine Steuerkammer begrenzen, wobei beiden Steuerkammern ein gemeinsamer Steuerdruckanschluss zugeordnet ist, mit dem sie jeweils unter Zwischenschaltung einer Drosseleinrichtung in Fluidverbindung stehen, und dass die beiden Steuerkammern stromab der jeweils zugeordneten Drosseleinrichtung mit je einer Entlüftungsöffnung verbunden sind, wobei diesen beiden Entlüftungsöffnungen eine mit dem Reglergehäuse zu einer Baueinheit zusammengefasste, elektrisch betätigbare Steuerventileinrichtung zugeordnet ist, die in der Lage ist, die beiden Entlüftungsöffnungen jeweils wahlweise freizugeben oder zu verschließen, einschließlich eines gleichzeitigen Verschließens beider Entlüftungsöffnungen.

Der symmetrische Aufbau in Bezug auf die beiden Fluidbeaufschlagungsflächen in Verbindung mit der Ansteuerung über einen gemeinsam zugeordneten Steuerdruckanschluss bietet die Gewähr, dass sich die bei gleichzeitigem Verschluss beider Entlüftungsöffnungen an der Stelleinrichtung angreifenden fluidischen Stellkräfte gegenseitig ausgleichen und eine klar definierte Position der Stelleinrichtung vorliegt. Es besteht insbesondere die Möglichkeit, bei verschlossenen Entlüftungsöffnungen eine Grundstellung der Stelleinrichtung vorzugeben, bei der der Arbeitsanschluss sowohl vom Speiseanschluss als auch vom Entlüftungsanschluss abgetrennt ist und ein konstanter Arbeitsdruck beibehalten wird. Da beide Steuerkammern an ein und denselben Steuerdruckanschluss angeschlossen sind, ist die Regelungsgenauigkeit von etwaigen Schwankungen des Steuerdruckes unabhängig. Um eine Stellbewegung der Stelleinrichtung hervorzurufen, die eine Veränderung des am Arbeitsanschluss anstehenden Arbeitsdruckes bewirkt, kann die eine oder andere der beiden Entlüftungsöffnungen durch entsprechende elektrische Ansteuerung der Steuerventileinrichtung geöffnet werden, sodass in der angeschlossenen Steuerkammer ein Druckabfall auftritt, der einen Ausschlag des Systems hervorruft. Die Zusammenfassung von Reglergehäuse und Steuerventileinrichtung zu einer Baueinheit gewährleistet kompakte Abmessungen und eine einfache Handhabung bei der Installation vor Ort.

Vorteilhafte Weiterbildungen der Erfindung gehen aus den Unteransprüchen hervor.

Es wäre prinzipiell möglich, den Steuerdruckanschluss unabhängig vom Speiseanschluss eigenständig mit unter dem gewünschten Druck stehendem Druckmedium zu versorgen. Bevorzugt wird allerdings eine Bauform, bei der der Steuerdruckanschluss an Bord des Stellungsreglers aus dem Speiseanschluss mit Druck versorgt wird, unter Zwischenschaltung eines Druckreglers, der die Vorgabe eines bezüglich des Speisedruckes geringeren Steuerdruckes ermöglicht, sodass die Fluidverluste bei geöffneten Entlüftungsöffnungen minimal sind.

Die Steuerventileinrichtung kann eine Proportionalventileinrichtung sein, die eine stetige, stufenlose Betätigung ermöglicht, sodass nicht nur zwischen einer Schließstellung und einer bestimmten Offenstellung umgeschaltet werden kann, sondern auch Zwischenstellungen mit variablem Strömungsquerschnitt einstellbar sind. Alternativ wäre allerdings auch eine Ausgestaltung als Schaltventileinrichtung möglich, insbesondere in Verbindung mit Mitteln zur pulsweitenmodulierten Ansteuerung.

Die Steuerventileinrichtung ist zweckmäßigerweise eine Piezo-Ventileinrichtung und verfügt über piezoelektrisch aktivierbare Ventilglieder. Hierdurch können besonders kompakte Abmessungen in Verbindung mit einem geringen Stromverbrauch realisiert werden.

Bei Einsatz einer piezoelektrischen Steuerventileinrichtung wird zweckmäßigerweise auf eine Bauform zurückgegriffen, die zwei jeweils einer der Entlüftungsöffnungen zugeordnete Ventilglieder aufweist, die von zwei nebeneinander angeordneten streifenförmigen piezoelektrischen Biegewandlern gebildet sind, welche Bestandteil einer integralen Biegewandlereinheit sind. Eine solche Biegewandlereinheit lässt sich aufgrund des symmetrischen Aufbaues wesentlich exakter ansteuern als zwei gesonderte Biegewandler.

Mit einer solchen Biegewandlereinheit lässt sich ein besonders großes Hubspektrum der beiden Ventilglieder realisieren und mithin ein relativ weiter Bereich des vorgebbaren Abströmquerschnittes, wenn die Biegewandlereinheit einen eine steife Verbindung zwischen den beiden Biegewandlern herstellenden Lagerungsabschnitt aufweist, der bezüglich des Ventilgehäuses verschwenkbar gelagert ist. Der Öffnungsvorgang des jeweils einen Ventilgliedes kann folglich dadurch unterstützt werden, dass das andere Ventilglied mit erhöhter Schließkraft gegen den Ventilsitz der zugeordneten Entlüftungsöffnung angedrückt wird und die Biegewandlereinheit um den Lagerungsabschnitt verschwenkt wird. Eine derartige, für den Einsatz bei dem vorliegenden Stellungsregler besonders geeignete Steuerventileinrichtung geht aus der EP 1207329 B1 hervor.

Die beiden für die Position der Stelleinrichtung verantwortlichen Fluidbeaufschlagungsflächen befinden sich vorzugsweise an zwei Membranelementen, die zweckmäßigerweise an den beiden einander axial entgegengesetzten Endabschnitten der Stelleinrichtung angeordnet sind.

Die Stelleinrichtung enthält zweckmäßigerweise ein relativ zum Reglergehäuse verstellbares stößelartiges Stellglied, das an seinen beiden Endabschnitten über je ein die zugeordnete Fluidbeaufschlagungsfläche definierendes äußeres Membranelement am Reglergehäuse aufgehängt ist. Dieses Stellglied trägt zweckmäßigerweise außerdem zwei bewegliche Verschlussglieder, die jeweils mit einem eine Überströmöffnung umgrenzenden gehäusefesten Ventilsitz zusammenwirken können, wobei zwischen den beiden Überströmöffnungen eine mit dem Arbeitsanschluss verbundene Arbeitskammer vorhanden ist, die in Abhängigkeit von der Position der Ventilglieder mit wahlweise dem Speiseanschluss oder dem Entlüftungsanschluss verbindbar oder gleichzeitig von diesen beiden Anschlüssen abtrennbar ist.

Um stets eine klar definierte Grundstellung zu erhalten, ist das Stellglied zweckmäßigerweise durch zwei einander entgegengesetzt wirkende Federeinrichtungen gegenüber dem Reglergehäuse axial vorgespannt. Um die Kennlinie des Stellungsreglers beeinflussen zu können, ist zweckmäßigerweise wenigstens eine der Federeinrichtungen hinsichtlich ihrer Federstellkraft variabel einstellbar.

Nachfolgend wird die Erfindung anhand der beiliegenden Zeichnung näher erläutert. In dieser zeigen:
- Figur 1: eine bevorzugte erste Bauform des erfindungsgemäßen Stellungsreglers, teilweise schematisch und teils im Längsschnitt, das Ganze in der Grundstellung der Stelleinrichtung,
- Figur 2: die Anordnung aus Figur 1 in der Speisestellung der Stelleinrichtung,
- Figur 3: die Anordnung aus Figuren 1 und 2 in der Entlüftungsstellung der Stelleinrichtung und
- Figur 4: in schematischer Darstellung eine Draufsicht mit Blickrichtung gemäß Pfeil IV auf eine besonders vorteilhafte Ausführungsform einer Biegewandlereinheit der Steuerventileinrichtung.

Der insgesamt mit Bezugsziffer 1 bezeichnete fluidbetätigte Stellungsregler ist in Form einer Baueinheit ausgeführt, in der die einzelnen Komponenten kompakt zusammengefasst sind. Lediglich der besseren Übersichtlichkeit halber sind die einzelnen Komponenten in der Zeichnung innerhalb der den Stellungsregler 1 definierenden rechteckigen Umrahmung einzeln abgebildet.

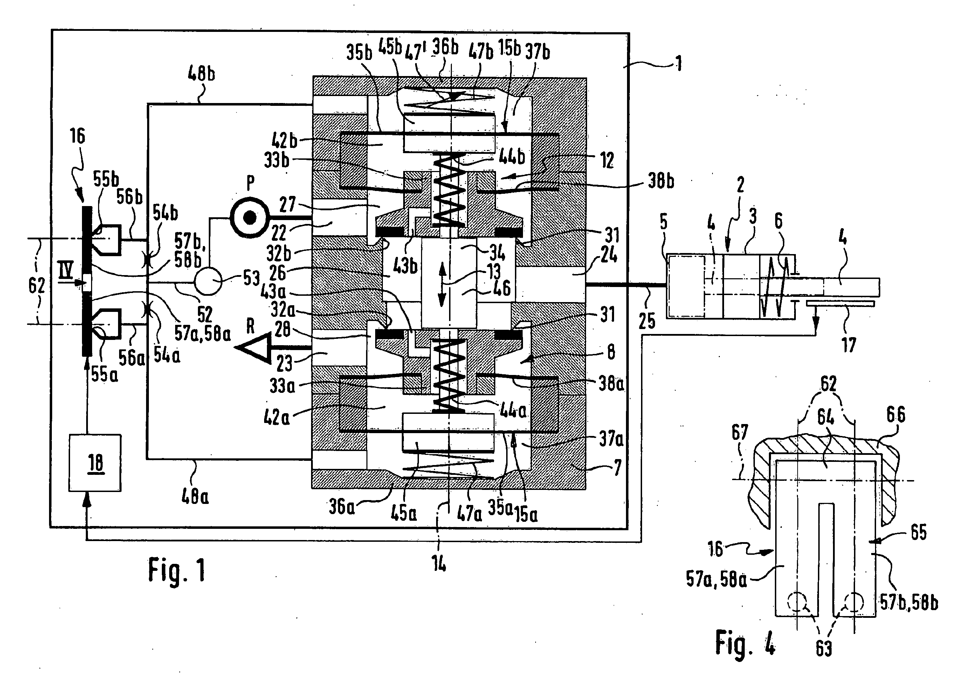

Die Figuren 1 bis 3 zeigen außerdem eine durch den Stellungsregler 1 ansteuerbare Arbeitsvorrichtung 2, bei der es sich exemplarisch um einen durch Fluidkraft einfachwirkend betätigbaren Antrieb eines mit seinen weiteren Komponenten nicht näher dargestellten Prozessventils handelt. Die Arbeitsvorrichtung 2 enthält ein Gehäuse 3 und ein diesbezüglich linear oder auch rotativ verstellbares Abtriebsteil 4, wobei das Abtriebsteil 4 mit dem Gehäuse 3 eine entgegen der Rückstellkraft einer Federeinrichtung 6 mit Druckmedium beaufschlagbare Antriebskammer 5 begrenzt.

Die Fluidbeaufschlagung der Antriebskammer 5 kann durch den Stellungsregler 1 in geregelter Weise vorgegeben werden, um eine vorbestimmte Position des Abtriebsteils 4 und folglich des von diesem angetriebenen Teils zu erhalten, Letzteres beispielsweise ein Ventilschieber.

Bei dem für den Betrieb verwendeten Druckmedium handelt es sich insbesondere um Druckluft. Prinzipiell könnten allerdings auch andere gasförmige Medien oder auch hydraulische Medien eingesetzt werden.

Der Stellungsregler 1 enthält ein Reglergehäuse 7, in dem eine längliche Gehäusekammer 8 ausgebildet ist, in der sich eine aus mehreren Komponenten zusammensetzende, insgesamt mit Bezugsziffer 12 bezeichnete Stelleinrichtung befindet. Auch die Stelleinrichtung 12 hat Längsgestalt, und sie beziehungsweise ihre einzelnen Komponenten sind in der Lage, eine als Stellbewegung 13 bezeichnete Linearbewegung in Richtung ihrer Längsachse 14, die gleichzeitig die Längsachse der Gehäusekammer 8 darstellt, relativ zum Reglergehäuse 7 auszuführen.

Die Stellbewegung 13 der Stelleinrichtung 12 und die daraus resultierende Positionierung erfolgt durch gesteuerte Fluidbeaufschlagung zweier axial in einander entgegengesetzte Richtungen weisender Fluidbeaufschlagungsflächen 15a, 15b der Stelleinrichtung 12. Für die Steuerung der Fluidbeaufschlagung ist eine elektrisch betätigbare Steuerventileinrichtung 16 vorhanden. Deren Betätigung erfolgt in Abhängigkeit von Positionssignalen, die durch eine geeignete Sensoreinrichtung 17, beispielsweise ein Wegmesssystem, vom Abtriebsteil 4 der Arbeitsvorrichtung 2 abgegriffen und einer elektronischen Steuereinrichtung 18 zugeleitet werden, die die elektrischen Betätigungssignale für die Steuerventileinrichtung 16 hervorruft. Die elektronische Steuereinrichtung 18 ist der Einfachheit halber nur in Figur 1 gezeigt und ist zweckmäßigerweise ein Bestandteil der Baueinheit des Stellungsreglers 1.

An dem Reglergehäuse 7 befinden sich ein Speiseanschluss 22, ein Entlüftungsanschluss 23 und ein Arbeitsanschluss 24. Der Speiseanschluss 22 ist an eine Druckquelle P anschließbar, insbesondere eine Druckluftquelle. Sie stellt das für die Betätigung des Abtriebsteils 4 erforderliche Druckmedium zur Verfügung.

Der Entlüftungsanschluss 23 steht mit der Atmosphäre R in Verbindung. Wird der Stellungsregler 1 mit hydraulischem Medium betrieben, führt der Entlüftungsanschluss 23 in einen Tank.

Der Arbeitsanschluss 24 dient zum Anschließen der Arbeitsvorrichtung 2. Er steht im Normalfall über eine Fluidleitung 25, die auch ein integrierter Fluidkanal sein kann, mit der Antriebskammer 5 in Verbindung.

Die drei vorgenannten Anschlüsse 23, 24, 25 kommunizieren über das Reglergehäuse 7 durchsetzende Fluidkanäle mit der Gehäusekammer 8. Sie münden seitlich in diese ein. Dabei kommuniziert der Arbeitsanschluss 24 mit einem als Arbeitskammer 26 bezeichneten Längenabschnitt der Gehäusekammer 8, während der Speiseanschluss 22 mit einer Speisekammer 27 und der Entlüftungsanschluss 23 mit einer Entlüftungskammer 28 in ständiger Verbindung stehen.

Die Arbeitskammer 26 wird axial auf einer Seite von der Speisekammer 27 und auf der entgegengesetzten Seite von der Entlüftungskammer 28 flankiert. Verbunden ist die Arbeitskammer 26 mit jeder der sie flankierenden Kammern 27, 28 über eine Überströmöffnung 32a, 32b, die von einem axial der zugeordneten Entlüftungskammer 28 beziehungsweise Speisekammer 27 zugewandten ringförmigen Ventilsitz 31 umgrenzt ist, dem jeweils ein in Richtung der Längsachse 14 bewegliches Verschlussglied 33a, 33b gegenüberliegt.

Die beiden in der Entlüftungskammer 28 beziehungsweise der Speisekammer 27 angeordneten Verschlussglieder 33a, 33b sind von einem sich in Richtung der Längsachse 14 erstreckenden zentralen, stößelartigen Stellglied 34 der Stelleinrichtung 12 durchsetzt. An den beiden Endabschnitten dieses Stellgliedes 34 ist jeweils ein flexibles, äußeres Membranelement 35a, 35b dicht befestigt, das andererseits am Reglergehäuse 7 unter Abdichtung fixiert ist. Jedes äußere Membranelement 35a, 35b begrenzt mit der axial benachbarten Abschlusswand 36a, 36b der Gehäusekammer 8 eine erste beziehungsweise zweite Steuerkammer 37a, 37b, wobei die der jeweiligen Steuerkammer zugewandte Membranfläche je eine der beiden oben erwähnten Fluidbeaufschlagungsflächen 15a, 15b bildet.

Mit axialem Abstand zu jedem äußeren Membranelement 35a, 35b ist jeweils ein inneres Membranelement 38a beziehungsweise 38b vorgesehen, das jeweils unter Abdichtung zum einen an einem der Verschlussglieder 33a beziehungsweise 33b und zum anderen am Reglergehäuse 7 angebracht ist. Die inneren Membranelemente 38a, 38b begrenzen jeweils die zugeordnete Entlüftungskammer 28 beziehungsweise Speisekammer 27 an der der Überströmöffnung 32a beziehungsweise 32b axial entgegengesetzten Seite.

Zwischen einem jeweiligen Paar innerer und äußerer Membranelemente 38a, 35a; 38b, 35b ist eine erste beziehungsweise zweite Druckausgleichskammer 42a beziehungsweise 42b eingeschlossen. Sie steht über mindestens einen, das zugeordnete Verschlussglied 33a, 33b durchsetzenden Druckausgleichskanal 43a, 43b in ständiger Verbindung mit der Arbeitskammer 26. Der Druckausgleichskanal 43a, 43b mündet radial innerhalb des zugewandten Ventilsitzes 31 an der axialen Stirnfläche des betreffenden Verschlussgliedes 33a, 33b aus. Alternativ könnten die Druckausgleichskanäle 43a, 43b auch im Reglergehäuse 7 ausgebildet sein.

Jedes Verschlussglied 33a, 33b ist durch eine ihm zugeordnete mechanische Federeinrichtung 44a, 44b relativ zum Stellglied 34 axial in Richtung zum gegenüberliegenden Verschlussglied hin vorgespannt. Unter Komprimierung der zugeordneten Federeinrichtung 44a, 44b können die beiden Verschlussglieder 33a, 33b unabhängig voneinander relativ zu dem von ihnen koaxial umschlossenen Stellglied 34 axial bewegt werden.

Beim Ausführungsbeispiel sind die Federeinrichtungen 44a, 44b als Druckfedereinrichtungen ausgebildet, die jeweils das Stellglied 34 koaxial umschließen, wobei sie sich einenends an einem auch zur Befestigung des äußeren Membranelementes 35a, 35b dienenden verbreiterten Kopf 45a, 45b des Stellgliedes 34 abstützen und andernends am Grund einer einen größeren Durchmesser als das Stellglied 34 aufweisenden Ausnehmung des benachbarten Verschlussgliedes 33a, 33b.

Axial zwischen den beiden Verschlussgliedern 33a, 33b befindet sich ein Mitnahmeabschnitt 46 des Stellgliedes 34. Sein Durchmesser ist größer als der das jeweils benachbarte Verschlussglied 33a, 33b tragende Längenabschnitt des Stellgliedes 34, sodass er in der Lage ist, als Bewegungsanschlag für die beiden Verschlussglieder 33a, 33b zu fungieren, der den Verstellweg des jeweiligen Verschlussgliedes 33a, 33b in Richtung zum jeweils anderen Verschlussglied relativ zum Stellglied 34 begrenzt.

Die Membranelemente 35, 38 verfügen über gummielastische oder federelastische Eigenschaften. Über sie sind zum einen das Stellglied 34 und zum anderen die Verschlussglieder 33a, 33b derart am Reglergehäuse 7 aufgehängt, dass sie die oben erwähnte Stellbewegung 13 ausführen können. Dabei ist die Auslegung so getroffen, dass im drucklosen Zustand des Systems die aus Figur 1 ersichtliche Konstellation vorliegt, bei der die Stelleinrichtung 12 eine Grundstellung einnimmt, wobei beide Verschlussglieder 33a, 33b unter Abdichtung am zugewandten Ventilsitz 31 anliegen und die zugehörige Überströmöffnung 32a, 32b verschlossen halten. Die Länge des Mitnahmeabschnittes 46 ist so gewählt, dass er in dieser Grundstellung an den beiden Verschlussgliedern 33a, 33b gerade eben anliegt oder minimal beabstandet ist.

Zur definierten Vorgabe der Grundstellung ist es allerdings von Vorteil, wenn zusätzlich noch zwei weitere Federeinrichtungen 47a, 47b vorhanden sind, die zwischen dem Stellglied 34 und dem Reglergehäuse 7 wirken und die das Stellglied 34 in einander entgegengesetzte axiale Richtungen beaufschlagen, sodass es in der Grundstellung zwischen diesen weiteren Federeinrichtungen 47a, 47b eingespannt und zentriert ist. Ist mindestens eine dieser weiteren Federeinrichtungen 47b hinsichtlich ihrer Federstellkraft variabel justierbar - in Figur 1 durch einen schrägen Pfeil 47' kenntlich gemacht -, lässt sich das Gesamtsystem beim Zusammenbau so justieren, dass im drucklosen Zustand die Grundstellung vorliegt.

Über die Höhe der Vorspannung der weiteren Federeinrichtungen 47a, 47b lässt sich auch die zum Auslenken des Stellgliedes 34 erforderliche fluidische Stellkraft beeinflussen und mithin die Kennlinie des Stellungsreglers.

Wird das Stellglied 34 ausgehend von der Grundstellung in die eine oder andere Richtung ausgelenkt, wird das bezogen auf die Bewegungsrichtung jeweils vorgelagerte Verschlussglied durch den Mitnahmeabschnitt 46 vom zugeordneten Ventilsitz 31 abgehoben. Das nachgeordnete andere Verschlussglied hingegen wird durch den ihm zugeordneten Ventilsitz 31 an Ort und Stelle zurückgehalten, wobei gleichzeitig die zwischen ihm und dem Stellglied 34 wirkende Federeinrichtung 44a beziehungsweise 44b komprimiert wird und so den in Schließrichtung wirkenden Anpreßdruck erhöht.

Die beiden an den äußeren Membranelementen 35a, 35b vorgesehenen Fluidbeaufschlagungsflächen 15a, 15b sind gleichgroß. Unter dem Begriff "Fluidbeaufschlagungsfläche" ist hierbei stets die wirksame Fluidbeaufschlagungsfläche zu verstehen, die für die Berechnung der hervorgerufenen Stellkräfte maßgebend ist und die bei einer Membran, anders als beispielsweise bei einem Kolben, aufgrund ihres Verformungsverhaltens in der Regel geringer ist als die gesamte Querschnittsfläche. Soweit im vorliegenden Text von einer Fluidbeaufschlagungsfläche die Rede ist, ist damit stets die wirksame Fluidbeaufschlagungsfläche gemeint.

Die beiden Steuerkammern 37a, 37b sind über je eine gesonderte erste beziehungsweise zweite Steuerleitung 48a, 48b an einen gemeinsamen Steuerdruckanschluss 52 angeschlossen. Beim Ausführungsbeispiel ist der Steuerdruckanschluss 52 vom Ausgang eines schematisch angedeuteten Druckreglers 53 gebildet, der als Bestandteil des Stellungsreglers 1 ausgeführt ist und der eingangsseitig mit dem Speiseanschluss 22 verbunden ist. Auf diese Weise wird das Steuerdruckmedium vom Speiseanschluss abgezweigt, und es erübrigen sich separate Anschlussmaßnahmen. Über den Druckregler 53 kann der gewünschte Steuerdruck präzise vorgegeben werden, wobei er in der Regel auf einem erheblich niedrigeren Niveau als der Speisedruck liegt.

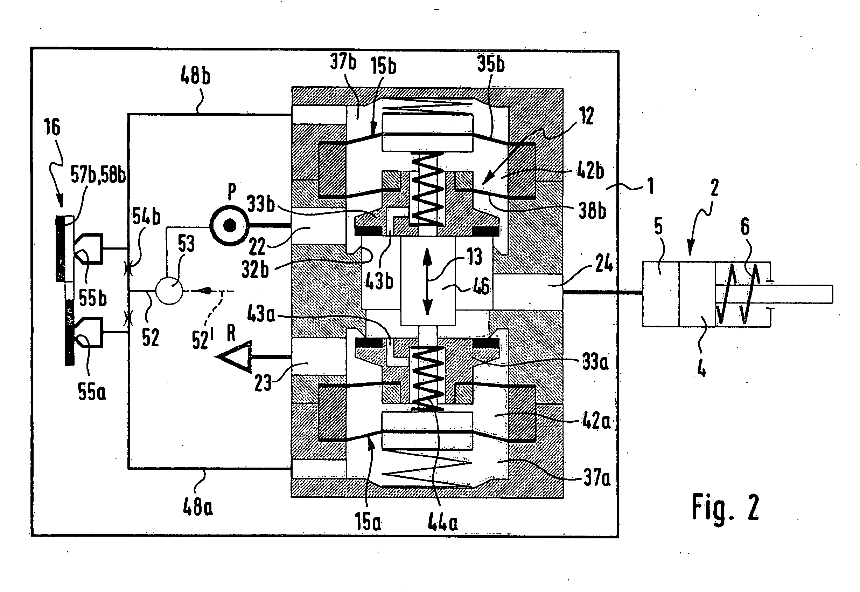

Prinzipiell ist es allerdings auch möglich, den Steuerdruck in gewünschter Höhe unabhängig vom Speiseanschluß separat einzuspeisen wie dies in Figur 2 gestrichelt bei 52' angedeutet ist.

In den Verlauf der beiden Steuerleitungen 48a, 48b ist jeweils eine Drosseleinrichtung 54a, 54b eingeschaltet, beispielsweise in Gestalt einer Kanalverengung. Bevorzugt verfügen die beiden Drosseleinrichtungen 54a, 54b über die gleiche Drosselungsintensität.

Von jeder Steuerleitung 48a, 48b zweigt eine zu einer Entlüftungsöffnung 55a, 55b führende Entlüftungsleitung 56a, 56b ab. Bezogen auf die Strömungsrichtung hin zur jeweiligen Steuerkammer 37a, 37b liegt die Abzweigstelle für die Entlüftungsleitung 56a, 56b stromab der zugeordneten Drosseleinrichtung 54a, 54b. Die Entlüftungsleitung 56a, 56b könnte auch jeweils direkt aus der zugeordneten Steuerkammer 37a, 37b abzweigen.

Die beiden Entlüftungsöffnungen 55a, 55b sind Bestandteil der oben erwähnten Steuerventileinrichtung 16. Diese ist in der Lage, die beiden Entlüftungsöffnungen 55a, 55b jeweils wahlweise freizugeben oder zu verschließen, einschließlich der Möglichkeit eines gleichzeitigen Verschließens beider Entlüftungsöffnungen 55a, 55b. Ist eine der Entlüftungsöffnungenfreigegeben, bleibt die jeweils andere Entlüftungsöffnung gleichzeitig geschlossen.

Die Steuerventileinrichtung 16 des Ausführungsbeispiels ist nach Art eines Stetigventils betreibbar. Neben der Schließstellung und der maximalen Offenstellung sind somit Zwischenstellungen zur variablen Vorgabe unterschiedlich großer Entlüftungsquerschnitte möglich. Alternativ könnte zur Beeinflussung der Strömungsrate des abströmenden Druckmediums auch eine pulsweitenmodulierte Ansteuerung des Steuerventils 16 stattfinden.

Die Steuerventileinrichtung 16 kann theoretisch elektromagnetisch aktivierbar ausgeführt sein. Bevorzugt wird allerdings eine Bauform piezoelektrischer Art. So enthält der beispielhafte Stellungsregler 1 zwei jeweils einer der beiden Entlüftungsöffnungen 55a, 55b zugeordnete, piezoelektrisch aktivierbare Ventilglieder 57a, 57b. Sie sind jeweils von einem streifenförmigen, piezoelektrischen Biegewandler 58a, 58b gebildet, der in einer zur Hauptausdehnungsebene des jeweiligen Biegewandlers 58a, 58b rechtwinkeligen Auslenkebene 62 gebogen wird, wenn eine entsprechende Ansteuerspannung an ihn angelegt wird. In der Schließstellung liegen die Ventilglieder 57a, 57b jeweils unter Abdichtung an einem die zugeordnete Entlüftungsöffnung 55a, 55b umgrenzenden Ventilsitz 63 an.

Die Steuerventileinrichtung 16 könnte für jede Entlüftungsöffnung 55a, 55b ein eigenes Steuerventil aufweisen. Beim Ausführungsbeispiel besteht die Steuerventileinrichtung 16 hingegen aus einem einzigen 3/3-Wege-Stetigventil in einer Bauweise, wie sie aus der EP 1207329 B1 hervorgeht, auf deren Inhalt hiermit ausdrücklich verwiesen wird. Dabei sind die beiden piezoelektrischen Biegewandler 58a, 58b mit zusammenfallenden Ausdehnungsebenen längsseits nebeneinander angeordnet und über einen einenends vorgesehenen steifen Lagerungsabschnitt 64 zu einer U- oder gabelartigen, integralen Biegewandlereinheit 65 zusammengefasst.

Beide Biegewandler 58a, 58b sind, zweckmäßigerweise unabhängig voneinander oder in einer fest vorgegebenen gegenseitigen Abstimmung, elektrisch ansteuerbar, wobei die hierzu erforderlichen elektrischen Leitungen in der Zeichnung nicht näher dargestellt sind. Diese Art der Ansteuerung ermöglicht eine in besonderer Weise aufeinander abgestimmte Betriebsweise. Bedeutsam hierbei ist außerdem, dass die Biegewandlereinheit 65 an ihrem Lagerungsabschnitt 64 derart an dem lediglich in Figur 4 angedeuteten Ventilgehäuse 66 der Steuerventileinrichtung 16 fixiert ist, dass die gesamte Biegewandlereinheit 65 um eine zu den Auslenkebenen 62 rechtwinkelige Drehachse 67 relativ zum Ventilgehäuse 66 verschwenkbar ist. Es liegt also keine starre Einspannung vor, sondern eine Lagerung, die die erwähnte Drehbeweglichkeit gewährleistet.

Zweckmäßigerweise ist die Biegewandlereinheit 65 durch eine nicht näher gezeigte mechanische Federeinrichtung derart beaufschlagt, dass sie im elektrisch deaktivierten Zustand mit beiden Ventilgliedern 57a, 57b die aus Figur 1 ersichtliche Schließstellung einnimmt. Ausgehend hiervon kann jeder Biegewandler 58a, 58b so angesteuert werden, dass er von der zugeordneten Entlüftungsöffnung 55a, 55b abhebt und somit hubabhängig einen mehr oder weniger großen Entlüftungsquerschnitt freigibt. Durch gleichzeitige Aktivierung des jeweils anderen Biegewandlers mit einer im Schließsinne wirksamen Kraft kann der Öffnungshub bei Bedarf noch vergrößert werden. Aufgrund der starren Verbindung am Lagerungsabschnitt 64 führt die hieraus resultierende Durchbiegung des sich am Ventilsitz 63 abstützenden Biegewandlers zu einem Verschwenken der gesamten Biegewandlereinheit 65 um die Drehachse 67, sodass der bereits abgehobene Biegewandler noch weiter ausgelenkt wird.

Der Einsatz der Biegewandlereinheit 65 hat aber auch den Vorteil, dass exakt symmetrische Konstruktionsverhältnisse bereitgestellt werden können, die einer präzisen Stellungsregelung äußerst förderlich sind. Betrachtet man ergänzend das Reglergehäuse 7 mit der darin untergebrachten Stelleinrichtung 12, die ebenfalls bezüglich der Längsmitte symmetrisch ausgebildet sind, liegt insgesamt ein symmetrisch aufgebauter Stellungsregler 1 vor.

Nachfolgend schließt sich eine Erläuterung einer typischen Betriebsweise des Stellungsreglers 1 an.

Bei Inbetriebnahme wird über den Speiseanschluss 22 Druckmedium in die Speisekammer 27 und auch - über den Druckregler 53 hinweg - in die beiden Steuerkammern 37a, 37b eingeleitet, wobei die Stelleinrichtung 12 ihre aus Figur 1 ersichtliche Grundstellung einnimmt. In diesem Zustand nimmt auch das Abtriebsteil 4 der angeschlossenen Arbeitsvorrichtung 2 seine Grundstellung ein, die in Figur 1 strichpunktiert angedeutet ist.

Aufgrund der identischen Fluidbeaufschlagungsflächen 15a, 15b an den beiden äußeren Membranelementen 35a, 35b verharrt das Stellglied 34 in seiner Grundstellung. Zumal sich auch die aus dem Speisedruck resultierenden Druckkräfte am zugeordneten ersten Verschlussglied 33a und an dem von diesem getragenen ersten inneren Membranelement 38a gegenseitig kompensieren. Die beiden Entlüftungsöffnungen 55a, 55b sind geschlossen.

Um nun das Abtriebsteil 4 auszufahren, wird der in der der Speisekammer 27 am nächsten liegenden zweiten Steuerkammer 37b herrschende Fluiddruck reduziert. Gemäß Figur 2 geschieht dies durch Öffnen der an die zugeordnete zweite Steuerleitung 48b angeschlossenen zweiten Entlüftungsöffnung 55b durch entsprechende Betätigung der Steuerventileinrichtung 16. Die vorgeschaltete zweite Drosseleinrichtung 54b verhindert hierbei einen übermäßigen Fluidverlust aus dem Steuerdruckanschluss 52. Die von dieser Drosseleinrichtung 54b zugelassene Strömungsrate ist zweckmäßigerweise wesentlich geringer als die durch die Steuerventileinrichtung 16 realisierbare Entlüftungs-Strömungsrate.

Da der Druck in der ersten Steuerkammer 37a aufgrund der weiterhin geschlossenen ersten Entlüftungsöffnung 55a konstant bleibt, verschieben sich die Kräfteverhältnisse an der Stelleinrichtung 12, und das Stellglied 34 wird gemäß Figur 2 in Richtung zur entlüfteten zweiten Steuerkammer 37b verschoben. Hierbei hebt sie mit ihrem Mitnahmeabschnitt 46 das erste Verschlussglied 33a vom zugeordneten Ventilsitz ab, sodass die zwischen der Speisekammer 27 und der Arbeitskammer 26 befindliche zweite Überströmöffnung 32b geöffnet wird. Somit kann Druckmedium aus dem Speiseanschluss 22 zum Arbeitsanschluss 24 und mithin zur Antriebskammer 5 der angeschlossenen Arbeitsvorrichtung 2 überströmen.

Da aufgrund der Druckausgleichskanäle 43a, 43b der in den Druckausgleichskammern 42a, 42b herrschende Druck gleichgroß ist wie der Druck in der Arbeitskammer 26, findet ein Druckkraftausgleich statt, sodass das erste Verschlussglied 33a durch die zugeordnete erste Federeinrichtung 44a in der Schließstellung gehalten wird.

Wenn das Abtriebsteil 4 die gewünschte Position erreicht hat, wird unter Vermittlung der elektronischen Steuereinrichtung 18 die zweite Entlüftungsöffnung 55b wieder geschlossen. Über die zweite Drosseleinrichtung 54b baut sich somit in der zweiten Steuerkammer 37b nach kurzer Zeit wieder der volle Steuerdruck auf, sodass die Stelleinrichtung 12 in die aus Figur 1 ersichtliche Grundstellung zurückkehrt. Da der Steuerdruck nun wieder in beiden Steuerkammern 37a, 37b konstant bleibt, ändert sich der Arbeitsdruck nicht mehr, und das Abtriebsteil 4 bleibt in der gewünschten Position.

Aufgrund der beiden weiteren Federeinrichtungen 47a, 47b bleibt die Grundstellung selbst dann erhalten, wenn der Steuerdruck aus irgendwelchen Gründen einmal ausfallen sollte.

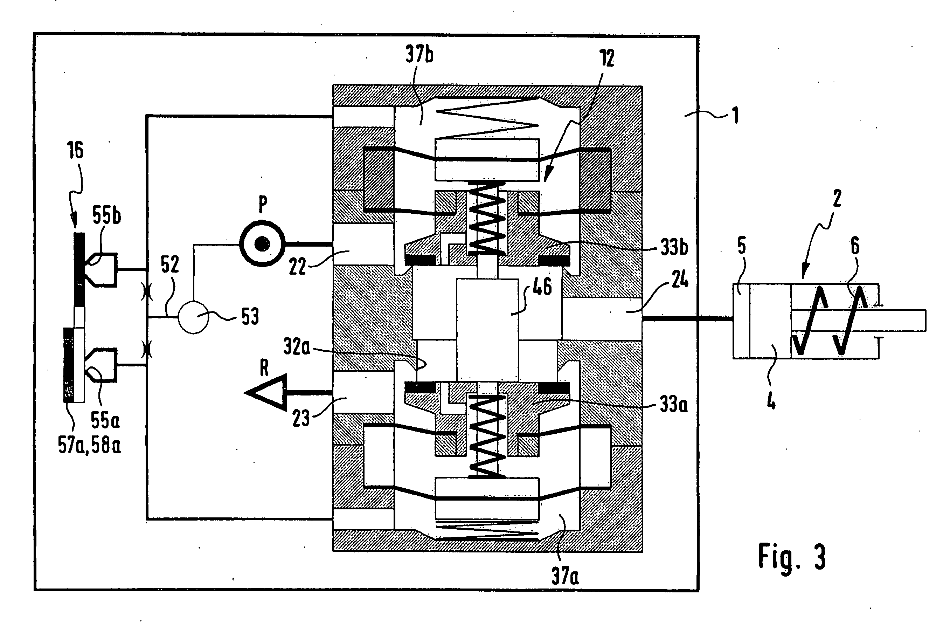

Zum Zurückstellen des Abtriebsteils 4 wird gemäß Figur 3 die Steuerventileinrichtung 16 so angesteuert, dass die zweite Entlüftungsöffnung 55b geschlossen bleibt, die erste Entlüftungsöffnung 55a jedoch freigegeben wird. Auf diese Weise wird über die zugeordnete erste Steuerleitung 48a die angeschlossene erste Steuerkammer 37a entlüftet. Als Folge werden die verschiedenen Membranen asymmetrisch mit Druckkräften beaufschlagt - der in der zweiten Steuerkammern 37b herrschende Steuerdruck bleibt ja konstant -, sodass sich das Stellglied 34 in Richtung der ersten Steuerkammer 37a bewegt und der Mitnahmeabschnitt 46 das erste Verschlussglied 33a vom zugeordneten Ventilsitz abhebt. Über die somit freigegebene erste Überströmöffnung 32a hinweg wird folglich der Arbeitsanschluss 24 mit der daran angeschlossenen Antriebskammer 5 zum Entlüftungsanschluss 23 entlüftet.

Ist das Abtriebsteil 4 in die gewünschte Stellung zurückgekehrt, schaltet die Steuereinrichtung 18 das erste Ventilglied 57a in die Schließstellung zurück, sodass wieder beide Entlüftungsöffnungen 55a, 55b abgesperrt sind. Nun kann sich in der ersten Steuerkammer 37a über die erste Drosseleinrichtung 54a hinweg wieder der vom Steuerdruckanschluss 52 vorgegebene Steuerdruck aufbauen. Folglich kehrt die Stelleinrichtung 12 neuerlich in die aus Figur 1 ersichtliche Grundstellung zurück, und der am Arbeitsanschluss 24 eingestellte Druck bleibt wieder unverändert.

Von Vorteil bei der beispielsgemäßen Auslegung ist der Umstand, dass das Stellglied 34 seine Grundstellung einnimmt, wenn in den beiden stirnseitigen Steuerkammern 37a, 37b identische Druckverhältnisse vorliegen. Hierbei ist dann der Arbeitsanschluss 24 gleichzeitig von sowohl dem Speiseanschluss 22 als auch dem Entlüftungsanschluss 23 fluiddicht abgetrennt und der in ihm herrschende Fluiddruck bleibt konstant.

## Patentansprüche

1. Fluidbetätigter Stellungsregler für Arbeitsvorrichtungen, insbesondere für Prozessventile, mit einem Reglergehäuse (7), in dem mindestens eine durch gesteuerte Fluidbeaufschlagung unter Ausführung einer Stellbewegung (13) verstellbare Stelleinrichtung (12) angeordnet ist, die in Abhängigkeit von ihrer Stellung in der Lage ist, einen Speiseanschluss (22), einen Entlüftungsanschluss (23) und einen für den Anschluss der Arbeitsvorrichtung (2) vorgesehenen Arbeitsanschluss (24) in unterschiedlicher Weise fluidisch miteinander zu verschalten, **dadurch gekennzeichnet, dass** die Stelleinrichtung (12) zur Vorgabe ihrer Position zwei in einander entgegengesetzte Richtungen der Stellbewegung (13) weisende, untereinander gleichgroße wirksame Fluidbeaufschlagungsflächen (15a, 15b) aufweist, die jeweils eine Steuerkammer (37a, 37b) begrenzen, wobei beiden Steuerkammern (37a, 37b) ein gemeinsamer Steuerdruckanschluss (52) zugeordnet ist, mit dem sie jeweils unter Zwischenschaltung einer Drosseleinrichtung (54a, 54b) in Fluidverbindung stehen, und dass die beiden Steuerkammern (37a, 37b) stromab der jeweils zugeordneten Drosseleinrichtung (54a, 54b) mit je einer Entlüftungsöffnung (55a, 55b) verbunden sind, wobei diesen beiden Entlüftungsöffnungen (55a, 55b) eine mit dem Reglergehäuse (7) zu einer Baueinheit zusammengefasste, elektrisch betätigbare Steuerventileinrichtung (16) zugeordnet ist, die in der Lage ist, die beiden Entlüftungsöffnungen (55a, 55b) jeweils wahlweise freizugeben oder zu verschließen, einschließlich eines gleichzeitigen Verschließens beider Entlüftungsöffnungen (55a, 55b).

2. Stellungsregler nach Anspruch 1, **dadurch gekennzeichnet, dass** der Steuerdruckanschluss (52) eingangsseitig unter Zwischenschaltung eines als Bestandteil der Baueinheit ausgeführten Druckreglers (53) mit dem Speiseanschluss (22) verbunden ist.

3. Stellungsregler nach Anspruch 1 oder 2, **dadurch gekennzeichnet, dass** die Steuerventileinrichtung (16) für stetige Betätigung und/oder für pulsweitenmodulierte Betätigung ausgelegt ist.

4. Stellungsregler nach einem der Ansprüche 1 bis 3, **dadurch gekennzeichnet, dass** die Steuerventileinrichtung (16) über piezoelektrisch aktivierbare Ventilglieder (57a, 57b) verfügt.

5. Stellungsregler nach einem der Ansprüche 1 bis 4, **dadurch gekennzeichnet, dass** die Steuerventileinrichtung (16) zwei jeweils einer der Entlüftungsöffnungen (55a, 55b) zugeordnete, in einem Ventilgehäuse (66) angeordnete Ventilglieder (57a, 57b) aufweist, die von zwei nebeneinander angeordneten streifenförmigen, piezoelektrischen Biegewandlern (58a, 58b) gebildet sind, die Bestandteil einer integralen Biegewandlereinheit (65) sind.

6. Stellungsregler nach Anspruch 5, **dadurch gekennzeichnet, dass** die Biegewandlereinheit (65) an einem einenends angeordneten, eine steife Verbindung zwischen den beiden Biegewandlern (58a, 58b) herstellenden Lagerungsabschnitt (64) um eine rechtwinkelig zu den Auslenkebenen (62) der Biegewandler (58a, 58b) verlaufende Drehachse (67) bezüglich des Ventilgehäuses (66) verschwenkbar gelagert ist.

7. Stellungsregler nach einem der Ansprüche 1 bis 6, **dadurch gekennzeichnet, dass** die beiden Steuerkammern (37a, 37b) von den einander axial entgegengesetzten Endabschnitten einer die Stelleinrichtung (12) enthaltenden Gehäusekammer (8) gebildet sind.

8. Stellungsregler nach einem der Ansprüche 1 bis 7, **dadurch gekennzeichnet, dass** die Stelleinrichtung (12) bei in den beiden Steuerkammern (37a, 37b) herrschenden identischen fluidischen Druckverhältnissen eine den Arbeitsanschluss (24) von sowohl dem Speiseanschluss (22) als auch dem Entlüftungsanschluss (23) abtrennende Position einnimmt.

9. Stellungsregler nach einem der Ansprüche 1 bis 8, **dadurch gekennzeichnet, dass** die beiden Fluidbeaufschlagungsflächen (15a, 15b) an jeweils einem Membranelement (35a, 35b) vorgesehen sind.

10. Stellungsregler nach einem der Ansprüche 1 bis 9, **dadurch gekennzeichnet, dass** die Stelleinrichtung (12) in einer Gehäusekammer (8) des Reglergehäuses (7) angeordnet ist und ein sich in Längsrichtung der Gehäusekammer (8) erstreckendes, relativ zum Reglergehäuse (7) verstellbares, stößelartiges Stellglied (34) aufweist, das an seinen beiden Endabschnitten über je ein die zugeordnete Fluidbeaufschlagungsfläche (15a, 15b) definierendes äußeres Membranelement (35a, 35b) am Reglergehäuse (7) beweglich aufgehängt ist.

11. Stellungsregler nach Anspruch 10, **dadurch gekennzeichnet, dass** das Stellglied (34) in koaxialer Anordnung zwei relativ zu ihm und zum Reglergehäuse (7) axial verstellbare, untereinander axial beabstandete Verschlussglieder (33a, 33b) trägt, die durch Federeinrichtungen (44a, 44b) relativ zum Stellglied (34) aufeinander zu gerichtet beaufschlagt sind und die jeweils einem von zwei einander axial entgegengesetzt orientierten gehäusefesten Ventilsitzen (31) gegenüberliegen, zwischen denen eine mit dem Arbeitsanschluss (24) verbundene Arbeitskammer (26) angeordnet ist, die durch von den Ventilsitzen (31) umgrenzte Überströmöffnungen (32b, 32a) mit einer diesseits angeordneten, mit dem Speiseanschluss (22) verbundenen Speisekammer (27) und einer jenseits angeordneten, mit dem Entlüftungsanschluss (23) verbundenen Entlüftungskammer (28) verbunden ist, wobei ein zwischen den Verschlussgliedern (33a, 33b) liegender Mitnahmeabschnitt (46) des Stellgliedes (34) so ausgebildet ist, dass er ausgehend von einer Grundstellung des Stellgliedes (34), in der beide Verschlussglieder (33a, 33b) am zugeordneten Ventilsitz (31) anliegen und die zugeordnete Überströmöffnung (32a, 32b) verschließen, je nach Verstellrichtung das eine oder andere Verschlussglied (33a, 33b) vom zugeordneten Ventilsitz (31) abhebt.

12. Stellungsregler nach Anspruch 11, **dadurch gekennzeichnet, das**s das Stellglied (34) bei in den beiden Steuerkammern (37a, 37b) herrschenden identischen Drücken die Grundstellung einnimmt.

13. Stellungsregler nach Anspruch 11 oder 12, **dadurch gekennzeichnet, dass** jedes Verschlussglied (33a, 33b) über ein dem ihm benachbarten äußeren Membranelement (35a, 35b) axial innen mit Abstand vorgelagertes inneres Membranelement (38a, 38b) beweglich am Reglergehäuse (7) aufgehängt ist, wobei das innere Membranelement (35a, 35b) die jeweils benachbarte Speisekammer (27) beziehungsweise Entlüftungskammer (28) von einer zwischen dem inneren und äußeren Membranelement liegenden Druckausgleichskammer (42a, 42b) dicht abtrennt und jede Druckausgleichskammer (42a, 42b), insbesondere durch das jeweils benachbarte Verschlussglied (33a, 33b) hindurch, ständig mit der Arbeitskammer (26) in Fluidverbindung steht.

14. Stellungsregler nach einem der Ansprüche 10 bis 13, **dadurch gekennzeichnet, dass** das Stellglied (34) durch zwei einander entgegengesetzt wirkende Federeinrichtungen (47a, 47b) gegenüber dem Reglergehäuse (7) axial vorgespannt und insbesondere lagezentriert ist, wobei zweckmäßigerweise wenigstens eine der Federeinrichtungen (47b) in ihrer Feder-Stellkraft variabel einstellbar ist.

## Claims

1. Fluid-actuated position controller for operating devices, in particular for process valves, with a regulator housing (7) in which is mounted at least one control unit (12) adjustable through execution of a control movement (13) by means of controlled fluid pressurisation and which is able, depending on its position, to connect fluidically with one another in different ways a supply port (22), a vent port (23) and an operating port (24) provided for connection of the operating device (2), **characterised in that** the control unit (12) has for presetting its position two effective fluid pressurisation surfaces (15a, 15b) of identical size, facing in opposite directions of the control movement (13) and each bounding a control chamber (37a, 37b), wherein both control chambers (37a, 37b) are assigned a common control pressure port (52) through which they are in fluidic connection, each via an interposed restrictor device (54a, 54b), and that the two control chambers (37a, 37b) are each connected downstream of the respectively assigned restrictor device (54a, 54b) to a vent port (55a, 55b), wherein these two vent ports (55a, 55b) are assigned an electrically actuable control valve unit (16) combined with the regulator housing (7) to form a unit and able to open or close the two vent ports (55a, 55b) alternately, including simultaneous closing of both vent ports (55a, 55b).

2. Position controller according to claim 1, **characterised in that** the control pressure port (52) is connected to the supply port (22) on the input side with the interposition of a pressure regulator (53) designed as an integral part of the unit.

3. Position controller according to claim 1 or 2, **characterised in that** the control valve unit (16) is designed for constant actuation and/or for pulse-width-modulated actuation.

4. Position controller according to any of claims 1 to 3, **characterised in that** the control valve unit (16) has piezoelectrically actuable valve members (57a, 57b).

5. Position controller according to any of claims 1 to 4, **characterised in that** the control valve unit (16) has two valve members (57a, 57b) mounted in a valve casing (66), each assigned to one of the vent ports (55a, 55b) and formed by two strip-like, piezoelectric bending transducers (58a, 58b) mounted alongside one another and forming part of an integral bending transducer unit (65).

6. Position controller according to claim 5, **characterised in that** the bending transducer unit (65) is pivotably mounted with respect to the valve casing (66) at a bearing section (64) located at one end and creating a rigid connection between the two bending transducers (58a, 58b), around a rotation axis (67) running at right-angles to the deflection planes (62) of the bending transducers (58a, 58b).

7. Position controller according to any of claims 1 to 6, **characterised in that** the two control chambers (37a, 37b) are formed by the axially opposite end sections of a housing chamber (8) containing the control unit (12).

8. Position controller according to any of claims 1 to 7 **characterised in that**, with identical fluidic pressure conditions prevailing in the two control chambers (37a, 37b), the control unit (12) adopts a position separating the operating port (24) from both the supply port (22) and also the vent port (23).

9. Position controller according to any of claims 1 to 8, **characterised in that** the two fluid pressurisation surfaces (15a, 15b) are each provided on a membrane element (35a, 35b).

10. Position controller according to any of claims 1 to 9, **characterised in that** the control unit (12) is mounted in a housing chamber (8) of the regulator housing (7) and has a ram-like control element (34), adjustable relative to the regulator housing (7) and extending in the longitudinal direction of the housing chamber (8), which is movably suspended from the regulator housing (7) at each of its two end sections by an outer membrane element (35a, 35b) defining the assigned fluid pressurisation surface (15a, 15b).

11. Position controller according to claim 10, **characterised in that** the control element (34) carries in a coaxial arrangement two closing members (33a, 33b), spaced axially apart and axially adjustable relative to the control element and the regulator housing (7), which are biased by spring devices (44a, 44b) towards one another relative to the control element (34) and each lie opposite two axially opposed valve seats (31) fixed to the housing, between which is located an operating chamber (26) connected to the operating port (24) and connected by overflow ports (32b, 32a) bounded by the valve seats (31) to a supply chamber (27) connected to the supply port (22) on the one side, and to a vent chamber (28) connected to the vent port (23) on the other side, wherein a driver section (46) of the control element (34) lying between the closing members (33a, 33b) is so designed that, from a basic position of the control element (34) in which both closing members (33a, 33b) fit up against the assigned valve seat (31) and close the assigned overflow port (32b, 32a), it lifts one or the other closing member (33a, 33b) from the assigned valve seat (31) depending on the direction of adjustment.

12. Position controller according to claim 11, **characterised in that** the control element (34) adopts the basic position when identical pressures prevail in the two control chambers (37a, 37b).

13. Position controller according to claim 11 or 12, **characterised in that** each closing member (33a, 33b) is suspended movably from the regulator housing (7) by an inner membrane element (38a, 38b) mounted axially with clearance in front of the outer membrane element (35a, 35b) adjacent to it, wherein the inner membrane element (35a, 35b) tightly separates the respectively adjacent supply chamber (27) or vent chamber (28) from a pressure compensation chamber (42a, 42b) lying between the inner and outer membrane element, and each pressure compensation chamber (42a, 42b) is in constant fluidic connection with the operating chamber (26), in particular through the respectively adjacent closing member (33a, 33b).

14. Position controller according to any of claims 10 to 13, **characterised in that** the control element (34) is axially biased towards the regulator housing (7) by two spring devices (47a, 47b) acting against one another, and in particular is position-centred, wherein expediently at least one of the spring devices (47b) has a variably adjustable spring setting force.

## Revendications

1. Régulateur de position actionné par fluide pour des dispositifs de travail, en particulier des vannes de traitement, avec un boîtier de régulateur (7) dans lequel est placé au moins un dispositif de réglage (12) pouvant être déplacé par une exposition contrôlée à un fluide en exécutant un mouvement de réglage (13), dispositif qui, en fonction de sa position, est en mesure de mettre en communication de fluide de différentes façons un raccordement d'alimentation (22), un raccordement d'évacuation de fluide (23) et un raccordement de travail (24) prévu pour le raccordement du dispositif de travail (2), **caractérisé en ce que** le dispositif de réglage (12) présente, pour imposer sa position, deux surfaces (15a, 15b) d'exposition de fluide actives de même dimension orientées dans des directions mutuellement opposées du mouvement de réglage (13), surfaces qui délimitent chacune une chambre de commande (37a, 37b), dans lequel aux deux chambres de commande (37a, 37b) est associé un raccordement de pression de commande commun (52) avec lequel elles sont en communication de fluide à chaque fois avec interposition d'un dispositif d'étranglement (54a, 54b), et **en ce que** les deux chambres de commande (37a, 37b) sont reliées chacune à une ouverture d'évacuation de fluide (55a, 55b) en aval du dispositif d'étranglement (54a, 54b) respectif associé, dans lequel à ces deux ouvertures d'évacuation de fluide (55a, 55b) est associé un dispositif à vanne de commande (16) actionnable électriquement, réuni en une unité avec le boîtier de régulateur (7) et qui est apte à libérer ou de fermer au choix les deux ouvertures d'évacuation de fluide (55a, 55b), y compris une fermeture simultanée des deux ouvertures d'évacuation de fluide (55a, 55b).

2. Régulateur de position selon la revendication 1, **caractérisé en ce que** le raccordement de pression de commande (52) est relié côté entrée au raccordement d'alimentation (22) avec interposition d'un régulateur de pression (53) réalisé sous forme de composant de l'unité.

3. Régulateur de position selon la revendication 1 ou 2, **caractérisé en ce que** le dispositif à vanne de commande (16) est conçu pour un actionnement permanent et/ou pour un actionnement modulé en largeur d'impulsion.

4. Régulateur de position selon l'une des revendications 1 à 3, **caractérisé en ce que** le dispositif à vanne de commande (16) dispose d'organes de vanne (57a, 57b) activables piézoélectriquement.

5. Régulateur de position selon l'une des revendications 1 à 4, **caractérisé en ce que** le dispositif à vanne de commande (16) présente deux organes de vanne (57a, 57b) associés chacun à l'une des ouvertures d'évacuation de fluide (55a, 55b), placés dans un boîtier de vanne (66) et qui sont formés de deux transducteurs à flexion piézoélectriques (58a, 58b) en forme de bande placés l'un à côté de l'autre, qui font partie d'une unité transductrice à flexion intégrale (65).

6. Régulateur de position selon la revendication 5, **caractérisée en ce que** l'unité transductrice à pression (65) est montée sur une section de montage (64) placée à une extrémité et établissant une liaison rigide entre les deux transducteurs à flexion (58a, 58b), d'une manière pivotante par rapport au boîtier de vanne (66) autour d'un axe de rotation (67) perpendiculaire aux plans de déformation (62) des transducteurs à flexion (58a, 58b).

7. Régulateur de position selon l'une des revendications 1 à 6, **caractérisé en ce que** les deux chambres de commande (37a, 37b) sont formées par les sections d'extrémité axialement opposées d'une chambre de boîtier (8) contenant le dispositif de réglage (12).

8. Régulateur de position selon l'une des revendications 1 à 7, **caractérisé en ce que**, quand il règne des conditions de pression de fluide identiques dans les deux chambres de commande (37a, 37b), le dispositif de réglage (12) prend une position séparant le raccordement de travail (24) à la fois du raccordement d'alimentation (22) et du raccordement d'évacuation de fluide (23).

9. Régulateur de position selon l'une des revendications 1 à 8, **caractérisé en ce que** les deux surfaces d'exposition au fluide (15a, 15b) sont prévues chacune sur un élément membrane (35a, 35b).

10. Régulateur de position selon l'une des revendications 1 à 9, **caractérisé en ce que** le dispositif de réglage (12) est placé dans une chambre de boîtier (8) du boîtier de régulateur (7) et présente un organe de réglage (34) de type poinçon s'étendant dans la direction longitudinale de la chambre de boîtier (8) et mobile par rapport au boîtier de régulateur (7), qui est suspendu au boîtier de régulateur (35a, 35b) d'une manière mobile au niveau de ses deux sections d'extrémité par l'intermédiaire à chaque fois d'un élément membrane extérieur (35a, 35b) définissant la surface d'exposition au fluide (15a, 15b) associée.

11. Régulateur de position selon la revendication 10, **caractérisé en ce que** l'organe de réglage (34) porte en disposition coaxiale deux organes de fermeture (33a, 33b) espacés axialement et mobiles axialement par rapport à lui et au boîtier de régulateur (7), organes qui sont sollicités en direction l'un de l'autre par des dispositifs à ressort (44a, 44b) par rapport à l'organe de réglage (34) et qui font face à chaque fois à l'un de deux sièges de vanne (31) solidaires du boîtier et orientés à l'opposé axialement l'un de l'autre, entre lesquels est placée une chambre de travail (26) reliée au raccordement de travail (24), laquelle est reliée par des ouvertures de trop-plein (32b, 32a) entourées par les sièges de vanne (31) avec une chambre d'alimentation (27) placée de ce côté et reliée au raccordement d'alimentation (22) et avec une chambre d'évacuation de fluide (28) placée de l'autre côté et reliée au raccordement d'évacuation de fluide (23), dans lequel une section d'entraînement (46) de l'organe de réglage (34) située entre les organes de fermeture (33a, 33b) est conformée de telle manière qu'en partant d'une position de base de l'organe de réglage (34) dans laquelle les deux organes de fermeture (33a, 33b) s'appuient contre le siège de vanne (31) associé et ferment l'ouverture de trop-plein (32a, 32b) associée, elle soulève l'un ou l'autre organe de fermeture (33a, 33b) du siège de vanne (31) associé, selon la direction de déplacement.

12. Régulateur de position selon la revendication 11, **caractérisé en ce que** l'organe de réglage (34) occupe la position de base quand des pressions identiques règnent dans les deux chambres de commande (37a, 37b).

13. Régulateur de position selon la revendication 11 ou 12, **caractérisé en ce que** chaque organe de fermeture (33a, 33b) est suspendu de manière mobile au boîtier de régulateur (7) par l'intermédiaire d'un élément membrane (38a, 38b) intérieur avancé à distance axialement à l'intérieur par rapport à l'élément membrane extérieur (35a, 35b) voisin, dans lequel l'élément membrane intérieur (35a, 35b) sépare hermétiquement la chambre d'alimentation (27) ou chambre d'évacuation de fluide (28) voisine respective d'une chambre d'équilibrage de pression (42a, 42b) située entre les éléments membrane intérieur et extérieur, et chaque chambre d'équilibrage de pression (42a, 42b) est en permanence en communication de fluide avec la chambre de travail (26), en particulier à travers l'organe de fermeture (33a, 33b) voisin respectif.

14. Régulateur de position selon l'une des revendications 10 à 13, **caractérisé en ce que** l'organe de réglage (34) est précontraint axialement par rapport au boîtier de régulateur (7), et en particulier centré en position, par deux dispositifs à ressort (47a, 47b) agissant en sens opposé, au moins l'un des dispositifs à ressort (47b) présentant de manière avantageuse une force de ressort réglable de façon variable.
